# EUROPEAN PATENT APPLICATION

(11) **EP 2 927 789 A1**
(43) Date of publication of application: **07.10.2015**
(21) Application number: 15162236.2
(22) Date of filing: 01.04.2015
(51) Int. Cl.: G06F 3/0482, G06F 3/0488

(54) **ELECTRONIC DEVICE AND METHOD FOR DISPLAYING USER INTERFACE**

(30) Priority: 01.04.2014 KR 20140038392
(71) Applicant: Samsung Electronics Co., Ltd, Gyeonggi-do 443-742 (KR)
(72) Inventor: Jeon, Ha Young, 137-898 Seoul (KR); Kwon, Zi On, 627-800 Gyeongsangnamdo (KR); Kim Hye Won, 156-772 Seoul (KR); Kim, Ho, 139-801 Seoul (KR); Seo, Jung Eui, 431-050 Gyeonggi-do (KR); Yang, Chang Mo, 426-707 Gyeonggi-do (KR); Chung, Jin Kyo, 132-793 Seoul (KR); Choi, Bong Hak, 412-740 Gyeonggi-do (KR); Choi, Joon Hyuk, 156-827 Seoul (KR)
(74) Representative: Nederlandsch Octrooibureau

(57) **Abstract**

A method of displaying a user interface (UI) on a display panel of an electronic device is provided. The method includes receiving an event corresponding to an operation of moving from an edge of an input panel of the electronic device to an internal part of the input panel and displaying a preset object or a preset screen effect based on the event that occurs on an edge of the input panel.

## Description

### TECHNICAL FIELD

The present disclosure relates to an electronic device and a method for providing a preset object or a screen effect based on the reception of a user input event. More particularly, the present disclosure relates to a method for receiving an event corresponding to an operation of moving from an edge of the input panel of the electronic device to an internal part of the input panel and displaying a preset object or a preset screen effect based on an event that occurs on an edge of the input panel.

### BACKGROUND

Together with the development of digital technology, various electronic devices that are capable of communication and processing information on the move, such as mobile communication terminals, personal digital assistants (PDAs), electronic notes, smart phones, tablet personal computers (PCs), and the like, have been recently released. Such electronic devices do not remain confined to their respective traditional unique areas but are attaining a mobile convergence environment in which they include areas for other terminals.

For example, an electronic device may include call functions, such as voice calling and video calling, message transmission/reception functions, such as a short message service (SMS)/a multimedia message service (MMS) and an e-mail service, electronic note functions, imaging functions, broadcast playback functions, video playback functions, music playback functions, internet functions, messenger functions, social networking service (SNS) functions, and the like.

With the development of the user interface (UI) for electronic devices or user experience (UX), various effects are being provided for the execution of an application or the switching of a screen.

The above information is presented as background information only to assist with an understanding of the present disclosure. No determination has been made, and no assertion is made, as to whether any of the above might be applicable as prior art with regard to the present disclosure.

### SUMMARY

Aspects of the present disclosure are to address at least the above-mentioned problems and/or disadvantages and to provide at least the advantages described below. Accordingly, an aspect of the present disclosure is to provide an electronic device and a method for displaying a preset object or a screen effect based on the reception of a user input event that is received from a user. However, technical issues to be resolved by various embodiments of the present disclosure are not limited to those described above and there may be other technical issues.

In accordance with an aspect of the present disclosure, a method of displaying a user interface (UI) on a display panel of an electronic device is provided. The method includes receiving an event corresponding to an operation of moving from an edge of an input panel of the electronic device to an internal part of the input panel and displaying a preset object or a preset screen effect based on an event that occurs on an edge of the input panel.

In accordance with another aspect of the present disclosure, an electronic device is provided. The electronic device includes a user input reception unit configured to receive a user input moving from an edge of the input panel of the electronic device to an internal part of the input panel and a display unit configured to display a preset object or a preset screen effect based on the reception of the user input.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 illustrates an operation of displaying a preset object based on a user input event corresponding to a corner of an electronic device input panel according to various embodiments of the present disclosure;
FIG. 2 illustrates an operation of displaying a preset object based on a user input event corresponding to a corner of an electronic device input panel according to another embodiment of the present disclosure;
FIG. 3 illustrates an operation of displaying a preset object based on a user input event corresponding to a segment of an electronic device input panel according to various embodiments of the present disclosure;
FIG. 4 illustrates an operation of displaying a preset object based on a user input event corresponding to a segment of an electronic device input panel according to various embodiments of the present disclosure;
FIG. 5 illustrates an operation of displaying a preset object based on a plurality of user input events corresponding to a corner of an electronic device input panel according to various embodiments of the present disclosure;
FIG. 6 illustrates an operation of displaying a preset object based on a plurality of user input events corresponding to a segment of an electronic device input panel according to various embodiments of the present disclosure;
FIG. 7 illustrates an operation of displaying a preset object based on a plurality of user input events corresponding to a segment of an electronic device input panel according to various embodiments of the present disclosure;
FIG. 8 illustrates an operation of removing a preset object or a screen effect displayed on a display panel of an electronic device according to another embodiment of the present disclosure;
FIG. 9 is a flowchart of a method of displaying a preset object or a screen effect by an electronic device according to various embodiments of the present disclosure;
FIG. 10 is a block diagram of an electronic device according to various embodiments of the present disclosure; and
FIG. 11 illustrates an electronic device that displays a preset object or a screen effect according to various embodiments of the present disclosure.

Throughout the drawings, it should be noted that like reference numbers are used to depict the same or similar elements, features, and structures.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to skill in the art, may occur in amounts that do not preclude the effect the characteristic was intended to provide.

The expression "include" or "may include" that may be used in describing the various embodiments of the present disclosure indicates the presence of a disclosed corresponding function, operation or component but does not exclude one or more functions, operations or components in addition. Furthermore, it should be understood that the term "includes" or "has" in various embodiments of the present disclosure indicates the presence of characteristics, numbers, operations, components, parts or combinations thereof represented in the present disclosure but do not exclude the presence or addition of one or more other characteristics, numbers, operations, components, parts or combinations thereof.

The expression "or" in the various embodiments of the present disclosure includes any and all combinations of enumerated words. For example, the expression "A or B" may include A, B, or both A and B.

The expression "a first", "a second", "firstly", or "secondly" in various embodiments of the present disclosure may modify various components of the present disclosure but do not limit corresponding components. For example, the expressions above do not limit the order and/or importance of corresponding components. The expressions above may be used to distinguish one component from another component. For example, both a first user device and a second user device are user devices that are mutually different user devices. For example, without departing from the scope of rights of the present disclosure, a first component may be called a second component and similarly, the second component may also be called the first component.

When any component is referred to as being "connected" or "accessed" to another component, it should be understood that the former can be "directly connected" to the latter, or there may be another component in between. On the contrary, when any component is referred to as being "directly connected" or "directly accessed" to another component, it should be understood that there may be no other component in between.

The terms used in various embodiments of the present disclosure are used only to describe specific embodiments and are not intended to limit the present disclosure.

Unless otherwise defined herein, all terms used herein including technical or scientific terms have the same meanings as those generally understood by a person skilled in the art. Terms defined in generally used dictionaries should be construed to have meanings matching contextual meanings in the related art and should not be construed as having an ideal or excessively formal meaning unless otherwise defined in various embodiments of the present disclosure.

An electronic device according to various embodiments of the present disclosure may be a device that includes a communication function. For example, the electronic device may include at least one of a smart phone, a tablet personal computer (PC), a mobile phone, a video phone, an e-book reader, a desktop PC, a laptop PC, a net book computer, a personal digital assistant (PDA), a portable multimedia player (PMP), a motion picture experts group (MPEG-1 or MPEG-2) audio layer 3 (MP3) player, a mobile medical device, a camera, and a wearable device (e.g., a head-mounted-device (HMD), such as electronic glasses, electronic clothing, an electronic bracelet, an electronic necklace, an electronic appcessory, an electronic tattoo, a smart watch, and the like).

According to various embodiments, the electronic device may be a smart home appliance having a communication function. The smart home appliance may include, for example, at least one of a Television (TV) set, a digital video disk (DVD) player, an audio set, a refrigerator, an air conditioner, a cleaner, an oven, a microwave oven, a washing machine, an air cleaner, a set-top box, a TV box (e.g., Samsung HomeSync^{™}, Apple TV^{™}, or Google TV^{™}), a game console, an electronic dictionary, an electronic key, a camcorder, an electronic frame, and the like.

According to various embodiments, the electronic device may include at least one selected from the group consisting of various medical devices (e.g., a magnetic resonance angiography (MRA) device, a magnetic resonance imaging (MRI) device, a computed tomography (CT) device, a camera, an ultrasonicator, and the like), a navigation system, a global positioning system (GPS) receiver, an event data recorder (EDR), a flight data recorder (FDR), a car infotainment device, electronic equipment for a ship (e.g., a navigation device or gyro compass for a ship), avionics, a security device, a head unit for a vehicle, an industrial or home robot, a financial institution's automated teller machine (ATM) or a store's point of sales (POS) device.

According to various embodiments, the electronic device may include at least one selected from the group consisting of a portion of a building/ structure or furniture including a communication function, an electronic board, an electronic signature receiving device, a projector, and various measurement devices (e.g., a water, electricity, gas or electric wave measurement device, and the like). An electronic device according to various embodiments of the present disclosure may be one or more combinations of the above-described various devices. Moreover, an electronic device according to various embodiments of the present disclosure may be a flexible device. Moreover, it is obvious to a person skilled in the art that electronic devices according to various embodiments of the present disclosure are not limited to the above-described devices.

In the following, electronic devices according to various embodiments are discussed with reference to the accompanying drawings. The tenm "user" used in various embodiments may mean a person who uses an electronic device or a device (e.g., an artificial intelligence electronic device) that uses the electronic device.

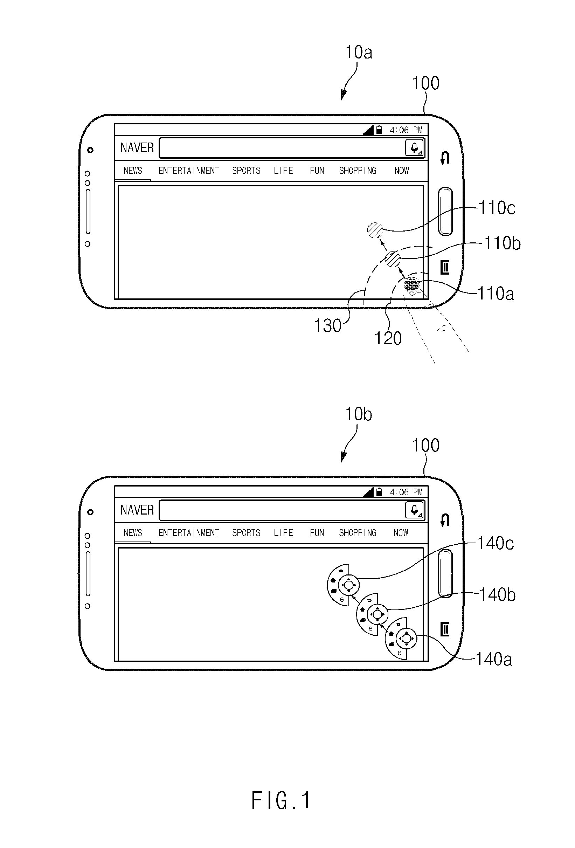

FIG. 1 illustrates an operation of displaying a preset object based on a user input event corresponding to a corner of an electronic device input panel according to various embodiments of the present disclosure.

Referring to FIG. 1, an upper part 10a of FIG. 1 shows a user input performed on the input panel of an electronic device 100, and a lower part 10b of FIG. 1 shows a preset object displayed based on the movement of the user input. The movement may include a touch and a drag of the user input.

For example, referring to an electronic device 100 shown through reference numeral 10a, a user may touch the lower right corner 110a of the input panel of the electronic device 100 with a his or her finger and gradually move to the upper left part, e.g., past reference numeral 110b to reference numeral 110c.

For example, the electronic device 100 may receive an event that corresponds to an operation that the user input moves from the lower right corner 110a of the input panel to the internal parts 110b and 110c of the input panel. With receiving the event, the electronic device 100 may display, on a display panel, a preset object on reference numeral 140a as shown through reference numeral 10b and display, on a display panel, a movement of the preset object from reference numeral 140a to reference numeral 140c via reference numeral 140b based on the movement of the user input. The input panel may overlay the display panel.

In this case, a location on which the preset object is displayed may correspond to a location on which the user input event occurs, and a trajectory of the preset object may correspond to a trajectory of the user input.

In addition, the preset object may be overlaid on an application being executed by the electronic device 100.

The application being executed on the electronic device 100 is a portal site or a website and the preset object may be something suitable for using the portal site or the website. For example, the displayed, preset object may include a direction key (upward, downward, leftward, rightward) User Interface (UI) and a menu UI corresponding to "Back", "Home", "Open New Window", and "Open on Web Browser".

According to various embodiments of the present disclosure, the preset object may be different according to an application being executed on the electronic device 100. For example, when the application being executed on the electronic device 100 is a video playback application, the preset object may include a menu UI that corresponds to a trick mode, such as "Pause", "Fast Forward", "Rewind" and "Stop".

In addition, the electronic device 100 does not necessarily display the preset object in response to all user inputs. According to various embodiments of the present disclosure, the electronic device 100 may display the preset object when a location on the input panel from which the user input has been initially received is the edge area of the input panel. For example, FIG. 1 shows when the user input starts from a corner area 120 of the edge areas of the electronic device 100, but if the user input does not start from the corner area 120, the electronic device 100 will not display the preset object but perform an operation corresponding to a user input event deviating from the corner area 120.

In addition, the electronic device 100 may display the preset object when the distance that the user input moves on the input panel is equal to or greater than a preset length. For example, when the user input event occurs on the location 110a of the reference numeral 10a of FIG. 1, the electronic device 100 may display the preset object when the user input moves from the location 110a to the outside of a broken line 130 representing a preset length.

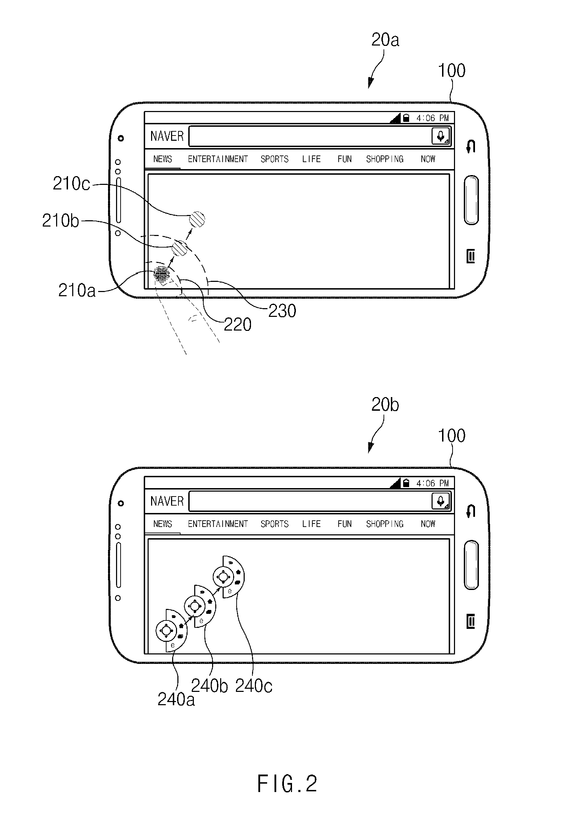

According to various embodiments of the present disclosure, the user input may be input by using a stylus including an S-pen in addition to a finger. However, the user input in FIGS. 2 to 8 is described as being input by using a finger for the convenience of description.

FIG. 2 shows when a user input is received from a corner area different from the corner area corresponding to the user input of FIG. 1.

FIG. 2 illustrates an operation of displaying a preset object based on a user input event corresponding to a corner of an input panel of an electronic device according to an embodiment of the present disclosure.

Referring to FIG. 2, a method of receiving the user input event by the electronic device 100 and displaying the preset object corresponds to that of FIG. 1.

When the user input event received by the electronic device 100 of FIG. 2 corresponds to an operation of moving from the lower-left corner 210a of the input panel of the electronic device 100 to the internal part of the input panel, e.g., past reference numeral 210b to reference numeral 210c, as shown with respect to reference numeral 20a, the electronic device 100 may display the preset object on reference numeral 240a and display a movement of the preset object from reference numeral 240a to reference numeral 240c via reference numeral 240b, as shown with respect to reference numeral 20b.

Referring to FIG. 2, the displayed preset object is similar to the displayed preset object in FIG. 1, but they have inverted shapes. The electronic device 100 of FIG. 1 may determine that a user uses his or her right hand because the user input event occurs on the lower right part of the electronic device, and on the contrary, the electronic device 100 of FIG. 2 may determine that the user uses his or her left hand. Thus, if the preset object displayed in FIG. 1 is something suitable for a right hand, it is possible to laterally switch and display the preset object displayed in FIG. 1 so that the preset object displayed in FIG. 2 is suitable for a left hand.

The preset objects displayed in FIGS. 1 and 2, respectively, may simply have a relationship in which they are laterally switched, but according to another embodiment of the present disclosure, the electronic device 100 may display different objects on corner areas respectively.

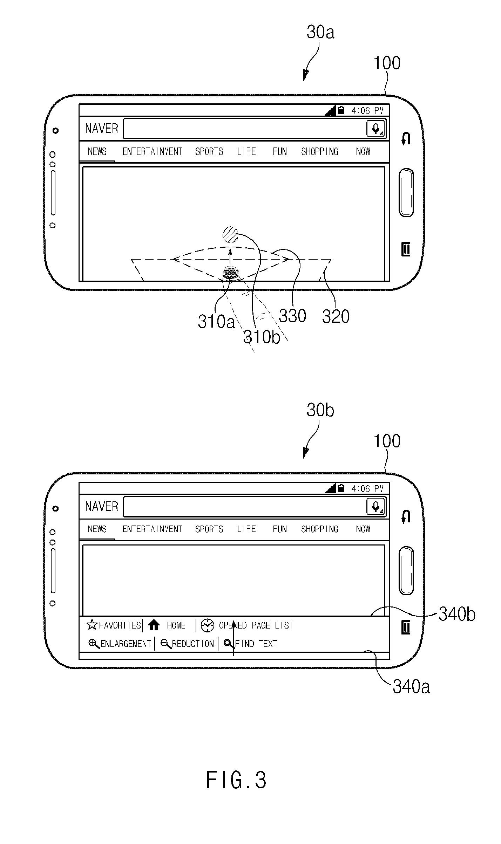

FIG. 3 shows when a user input is received from a segment area other than the corner area, among the edge areas of an input panel.

FIG. 3 illustrates an operation of displaying a preset object based on a user input event corresponding to a segment of an input panel of an electronic device according to various embodiments of the present disclosure.

Referring to FIG. 3, the electronic device 100 shown through reference numeral 30a, a user may touch a lower part 310a of the input panel of the electronic device 100 with his or her finger and gradually move to an upper part, e.g., to reference numeral 310b.

For example, the electronic device 100 may receive an event that corresponds to an operation that the user input moves from the lower part 310a of the input panel to the internal part 310b of the input panel. With receiving the event, the electronic device 100 may display the preset object opening from the lower part of a display panel and past reference numeral 340a to reference numeral 340b as shown through reference numeral 30b.

The displayed preset object may include a menu UI that corresponds to a web browser application being executed on the electronic device 100. For example, 'Favorites', 'Home', 'Opened Page List', 'Enlargement', 'Reduction' and 'Find Text', and the like, may be included in the displayed object as the menu UI suitable for the web browser application.

The displayed preset object may be different according to an application being executed on the electronic device 100. For example, when the application being executed on the electronic device 100 is a video playback application, the preset object may include a menu UI that corresponds to a trick mode, such as "Pause", "Fast Forward", "Rewind" and "Stop".

The electronic device 100 in FIG. 3 may display the preset object when a location of the input panel from which the user input has been initially received is a segment area 320 of the input panel. If the user input starts from an area other than the segment area 320, the electronic device 100 does not display the preset object but performs an operation corresponding to a user input event deviating from the segment area 320.

In addition, it is possible to display the preset object when the distance that the user input moves on the input panel is equal to or greater than a preset length. For example, when the user input event occurs on the reference numeral 310a of the reference numeral 30a of FIG. 3, the electronic device 100 may display the preset object when the user input moves from the reference numeral 310a to the outside of a broken line 330 representing the preset length.

Furthermore, the electronic device 100 may display the preset object when the angle between the trajectory from reference numeral 310a to reference numeral 310b and the edge of the input panel is equal to or greater than the preset angle. If the user input is has an angle less than the preset angle from the reference numeral 310a (e.g., the user input simply moves to the left or to the right), the electronic device 100 may receive the user input event to perform a corresponding function (e.g., page scroll).

Although the preset object displayed in FIG. 3 is described that the preset object's size is determined according to the movement of the user input, the preset object displayed based on the user input event corresponding to a segment area of edges areas is not limited thereto. For example, the preset object displayed based on a user input event corresponding to the segment area may also be an object of which the size is determined and which moves according to movement of the user input, like the preset object displayed in FIG. 1 or 2.

In addition, according to another embodiment of the present disclosure, when the user input moves a distance equal to or greater than a preset value, the size of the displayed object may be determined by the display panel size, not the location of the user input.

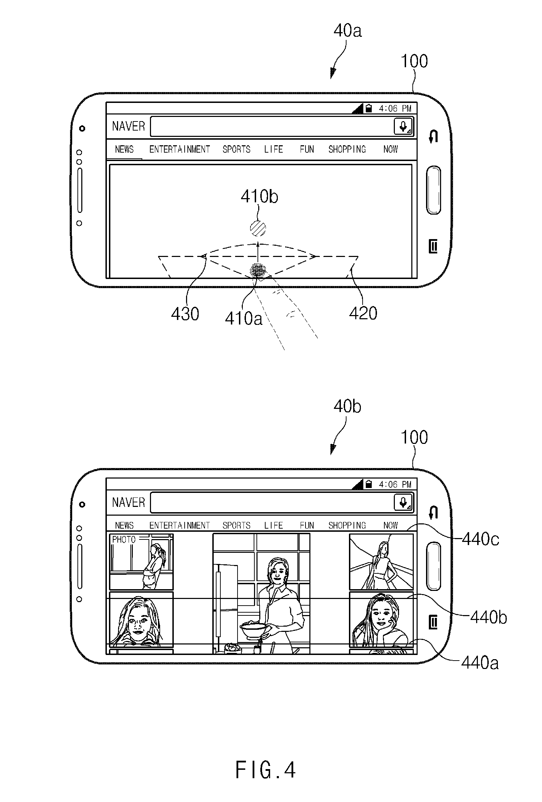

FIG. 4 illustrates an operation of displaying a preset object based on a user input event corresponding to a segment of an electronic device input panel according to various embodiments of the present disclosure.

Referring to FIG. 4, the electronic device 100 shown through reference numeral 40a, a user may touch a lower part 410a of the input panel of the electronic device 100 with his or her finger and gradually move to an upper part, e.g., to reference numeral 410b. The electronic device 100 in FIG. 4 may display the preset object when a location of the input panel from which the user input has been initially received is a segment area 420 of the input panel. If the user input starts from an area other than the segment area 420, the electronic device 100 does not display the preset object but performs an operation corresponding to a user input event deviating from the segment area 420.

In addition, it is possible to display the preset object when the distance that the user input moves on the input panel is equal to or greater than a preset length. For example, when the user input event occurs on the reference numeral 410a of the reference numeral 40a of FIG. 3, the electronic device 100 may display the preset object when the user input moves from the reference numeral 410a to the outside of a broken line 430 representing the preset length.

The user input shown through reference numeral 40a of FIG. 4 is similar to the user input shown through reference numeral 30a but may be different in operation that is performed by the electronic device 100 based on a user input event.

When the electronic device 100 of FIG. 4 receives a user input event moving from a segment area to the internal part of a display panel of the electronic device 100, the electronic device 100 may switch a screen displayed on the input panel. For example, the electronic device 100 may display an application execution screen from another application execution screen by switching the screen.

Referring to reference numeral 40b, an application displayed on the display panel of the electronic device 100 before the user input event occurs has been a web browser application, and after the user input event of reference numeral 40a has occurred, the electronic device 100 may display another application, such as a photo gallery application on the display panel.

In this case, the displayed photo gallery application may gradually open and be displayed from reference numeral 440a toward reference numeral 440c via reference numeral 440b according to a direction in which a user input is performed, and eventually only the photo gallery application may be displayed.

The other application displayed may be an application that has been executed right before or included in Favorites. In this case, at least one application may be preset for each of four segment areas, i.e., upper, lower, left and right segment areas that are included in the edge areas of the input panel of the electronic device 100.

With reference to FIGS. 1 to 4, a preset object or a screen effect displayed on the display panel of the electronic device 100 has been described. However, when the user input corresponds to the corner area, the present disclosure is not limited to display the object of FIG. 1 or 2 of which a preset size does not vary, and when the user input corresponds to the segment area, the present disclosure is not limited to display a screen switch effect or the object of FIG. 3 or 4 of which the preset size varies.

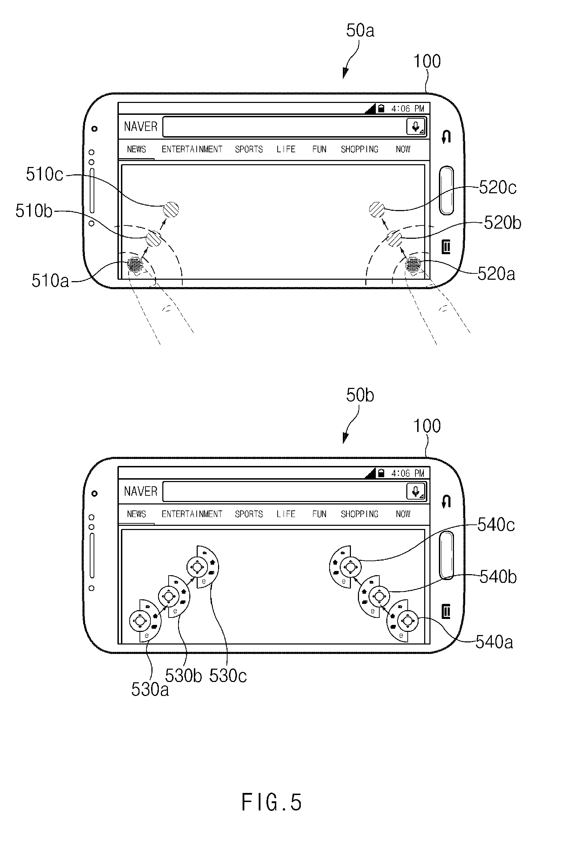

In the following, FIGS. 5 to 7 show a preset object or a screen effect displayed on the electronic device 100 when a plurality of user input events occur.

FIG. 5 illustrates an operation of displaying a preset object based on a plurality of user input events corresponding to a corner of an electronic device input panel according to various embodiments of the present disclosure.

Referring to reference numeral 50a of FIG. 5, the electronic device 100 may receive an event corresponding to a user input that moves from the lower left corner 510a of the input panel to the internal part and an event corresponding to a user input moving from the lower right corner 520a of the input panel to the internal part. In this case, the user input moving from the lower left corner 510a of the input panel to the internal part may move from reference numeral 510a and past reference numeral 510b to reference numeral 510c and similarly, the user input moving from the lower right corner 520a of the input panel to the internal part may move from reference numeral 520a and past reference numeral 520b to reference numeral 520c.

In this case, all user inputs are illustrated as an example that move a distance equal to or greater than a preset distance from a corner area of edge areas.

Referring to reference numeral 50b of FIG. 5, the electronic device 100 may display the preset objects shown in FIGS. 1 and 2 respectively, based on the user input event shown through reference numeral 50a. In this case, the electronic device 100 may display a first object with a movement from reference numeral 530a to reference numeral 530c via reference numeral 530b, and a second object with a movement from reference numeral 540a to reference numeral 540b and then to reference numeral 540c, according to each of the plurality of user input events.

However, according to another embodiment of the present disclosure, the electronic device 100 may display one preset object not a plurality of preset objects, based on the reception of the plurality of user input events.

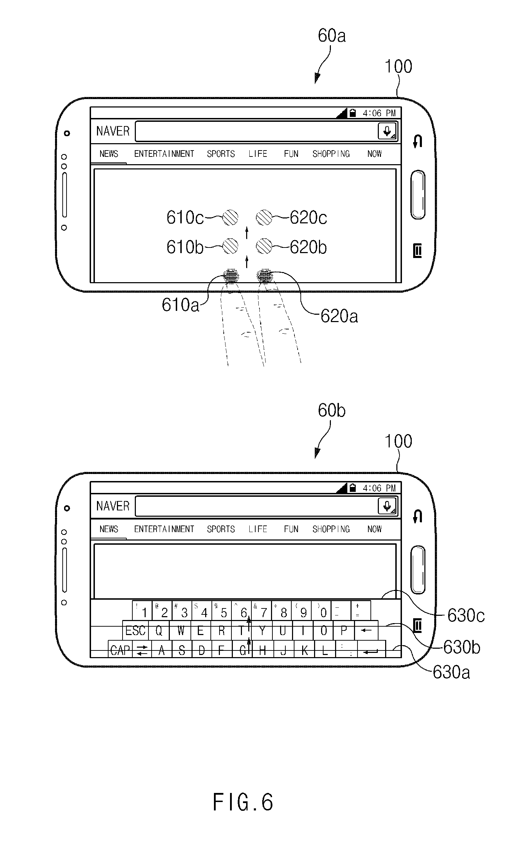

FIG. 6 illustrates an operation of displaying a preset object based on a plurality of user input events corresponding to a segment of a input panel of an electronic device according to various embodiments of the present disclosure.

Referring to reference numeral 60a of FIG. 6, the electronic device 100 may receive an event corresponding to a user input that moves from the lower segment 610a of the input panel to the internal part and an event corresponding to a user input moving from the lower segment 620a of the input panel to the internal part. In this case, the user input moving from the lower segment 610a of the input panel to the internal part may move from reference numeral 610a to reference numeral 610b and then reference numeral 610c and similarly, the user input moving from the lower segment 620a of the input panel to the internal part may move from reference numeral 620a to reference numeral 620b and then reference numeral 620c.

In this case, each user input are illustrated as an example that moves a distance equal to or greater than a preset value from a segment area of all edge areas. In addition, each user input, which angle between the trajectory of a movement of each user input and the edge of the input panel is equal to or greater than a preset value, around a location from which the user input is initially received, are illustrated as an example.

Referring to reference numeral 60b of FIG. 6, the electronic device 100 may display a preset object based on the user input event shown through reference numeral 60a. In this case, the electronic device 100 may expose the preset object from reference numeral 630a to reference numeral 630b and then reference numeral 630c, in a direction corresponding to the user input event.

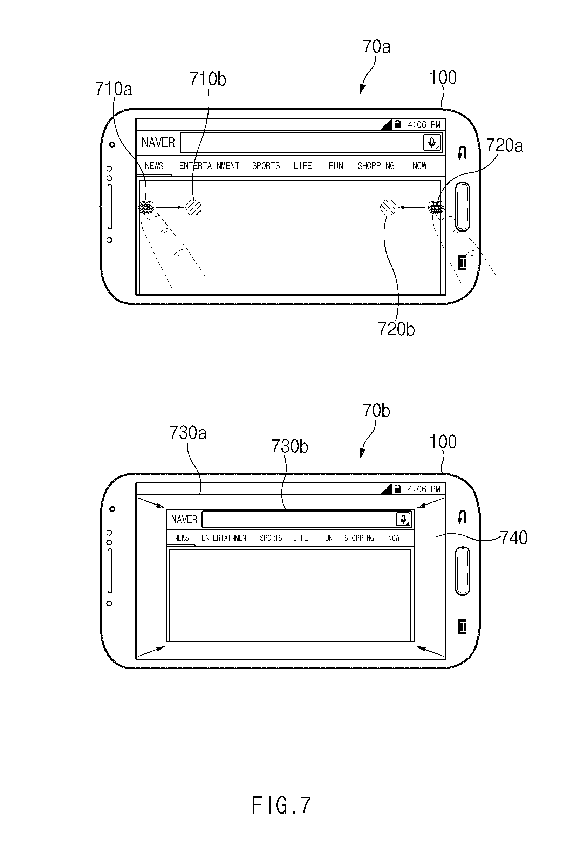

FIG. 6 shows when a plurality of user input events correspond to one of a plurality of segment areas, such as upper, lower, left and right segment areas that are included in the edge areas of the input panel. In the following, FIG. 7 shows when a user input event corresponds to each of two or more of a plurality of segment areas.

FIG. 7 illustrates an operation of displaying a preset object based on a plurality of user input events corresponding to a segment of a input panel of an electronic device according to various embodiments of the present disclosure.

Referring to reference numeral 70a of FIG. 7, the electronic device 100 may receive an event corresponding to a user input that moves from the left segment 710a of the input panel to the internal part and an event corresponding to a user input moving from the right segment 720a of the input panel to the internal part. In this case, the user input moving from the left segment 710a of the input panel to the internal part may move from reference numeral 710a to reference numeral 710b and similarly, the user input moving from the right segment 720a of the input panel to the internal part may move from reference numeral 720a to reference numeral 720b.

In this case, each user input moves a distance equal to or greater than a preset value from a segment area of all edge areas. In addition, at each user input, the angle between the trajectory of a movement of a user input and the edge of the input panel is equal to or greater than a preset value, around a location from which the user input is initially received.

Referring to reference numeral 70b of FIG. 7, the electronic device 100 may enlarge or reduce a screen size of an application being executed as a screen effect, based on the user input event shown through reference numeral 70a. For example, the electronic device 100 may reduce an application screen from reference numeral 730a to reference numeral 730b, based on the user input event shown through reference numeral 70a. In this case, the edge of a reduced application screen may correspond to a location at which the user input event shown through reference numeral 70a is released.

According to another embodiment of the present disclosure, the electronic device 100 may display the screen reduction effect of FIG. 7, based on an event corresponding to a user input moving from the lower left segment of the input panel to the internal part and an event corresponding to a user input moving from the upper right segment of the input panel to the internal part.

Similarly, the electronic device 100 may also display the screen reduction effect of FIG. 7, based on an event corresponding to a user input moving from the upper left segment of the input panel to the internal part and an event corresponding to a user input moving from the lower right segment of the input panel to the internal part.

A black screen may be displayed on an area 740 that appears due to the reduction of the application, or a home screen or a widget screen may be displayed thereon. Otherwise, an application that has been previously executed may be displayed on the area 740.

According to another embodiment of the present disclosure, the electronic device 100 may also display summary information corresponding to an application being executed or the current screen of an application, based on a plurality of user input events corresponding to reference numeral 70a of FIG. 7.

In this case, the summary information may include an item having a higher priority of that application or the current screen of an application.

For example, the summary information on a phonebook application may include contact included in "Favorites" or contact that is frequently used. The summary information on a "Favorites" list screen of a web browser application may include a preset number of "Favorites" list that a user most frequently visits among a plurality of "Favorites". In addition, summary information on an application list screen may include a list of applications that include a new event, such as an application having updates or an application that has a new message. Furthermore, the summary information on a home screen or a widget screen may be a list that is popped up when a menu button is touched, clicked or activated.

In addition, when summary information is displayed, an application screen being executed may be dimmed or hidden.

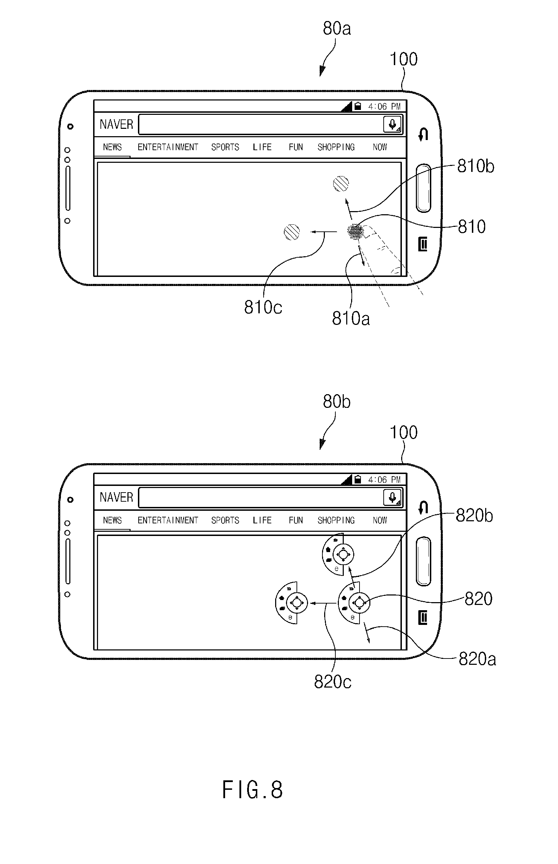

FIG. 8 illustrates an operation of removing a preset object or a screen effect displayed on a display panel of an electronic device according to another embodiment of the present disclosure.

Referring to reference numeral 80b of FIG. 8, a preset object 820 is displayed on the display panel of the electronic device 100. The location of the displayed preset object 820 corresponds to a location 810 of an input panel shown through reference numeral 80a of FIG. 8.

In this case, the electronic device 100 may receive a user input event corresponding to the displayed preset object 820 and then may further receive an event corresponding to an operation that a user input moves from the location 810 to reference numeral 810a, 810b or 810c.

Referring to reference numeral 80b of FIG. 8, the electronic device 100 may move the displayed preset object 820 to reference numeral 820a, 820b or 820c, in response to the movement event of the user input. Similar to the movement to reference numeral 820a, a user may drag & drop that object to the outside of the input panel in order to remove the preset object 820.

According to another embodiment of the present disclosure, while the preset object 820 is displayed, the electronic device 100 may receive a user input event moving from the edge of the input panel to the internal part to remove the preset object 820 and to newly display a preset object or display a screen effect.

In addition, when the preset object is an object of which the size is not fixed but determined according to a distance that a user input has moved, a user may touch the border between the preset object and the home screen or touch the border between the preset object and application displayed on the display panel, and move the user input in a direction opposite to a direction in which the object opens, e.g., toward an edge area in order to remove that object.

Fundamentally, in order to remove the preset object or the screen effect (make the preset object or the screen effect disappear), there is a need to cause a user input event in a direction opposite to a direction in which a user input is performed for displaying the preset object or the screen effect.

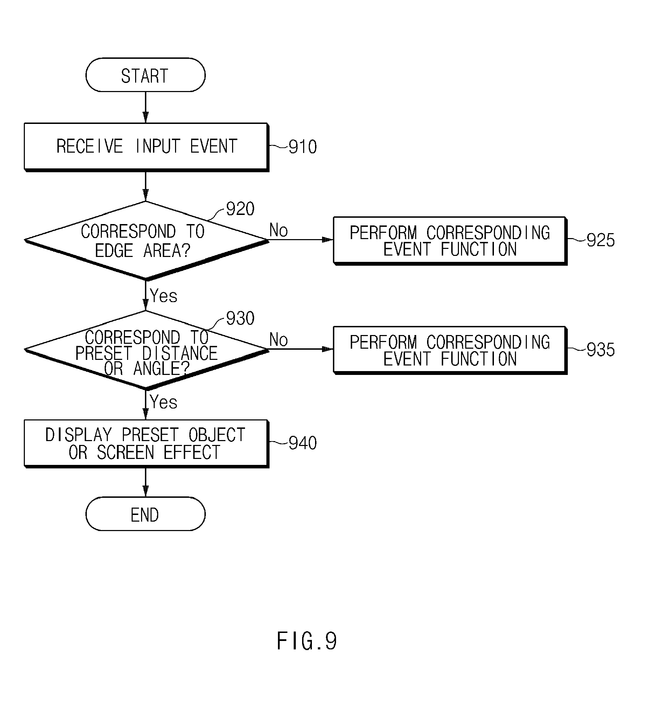

FIG. 9 is a flowchart of a method of displaying a preset object or a screen effect by an electronic device according to various embodiments of the present disclosure.

The method of displaying the preset object or the screen effect according to an embodiment shown in FIG. 9 includes operations time-serially processed by the electronic device 100 according to the various embodiments shown in FIGS. 1 to 8. Thus, content described with respect to the electronic device 100 of FIGS. 1 to 8 may also be applied to the method of displaying the preset object or the screen effect by the electronic device 100 according to an embodiment shown in FIG. 9, even if the content is left out in the following.

Referring to FIG. 9, in operation 910, the electronic device 100 may receive a user input event corresponding to a user input performed by a user of the electronic device 100.

In operation 920, the electronic device 100 may determine whether the user input event received in operation 910 corresponds to the edge area of the electronic device 100. In addition, the electronic device 100 may further determine whether the user input event corresponds to a corner area of edge areas or whether the user input corresponds to a segment area thereof.

When the user input event received in operation 910 does not correspond to the edge area, the electronic device 100 may perform a function corresponding to that user input event in operation 925.

When the user input event received in operation 910 corresponds to the edge area, the electronic device 100 may determine whether that user input event moves by a preset distance in operation 930. Furthermore, the electronic device 100 may further determine whether that user input event satisfies a preset angle condition.

When the user input event received in operation 910 has not moved by the preset distance or not satisfied the preset angle condition, the electronic device 100 may perform a function corresponding to that user input event in operation 935.

When the user input event received in operation 910 has moved by the preset distance and the user input event corresponding to the segment area has satisfied the preset angle condition, the electronic device 100 may display the preset object or the screen effect based on that user input event in operation 940.

The order of operations 920 and 930 described with respect to FIG. 9 is an example and the present disclosure is not limited thereto. For example, the order of the operations 920 and 930 described above may be mutually changed and they may be performed together. In addition, the above-described operations may be repeated regularly every preset hour and re-performed based on a new user input.

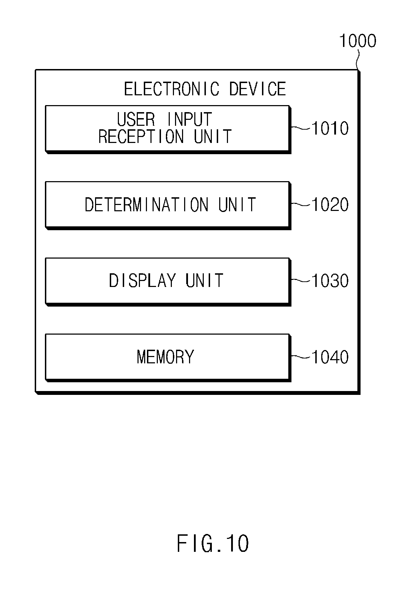

FIG. 10 is a block diagram of an electronic device according to various embodiments of the present disclosure.

Referring to FIG. 10, an electronic device 1000 may include a user input reception unit 1010, a determination unit 1020, a display unit 1030, and a memory 1040. However, the electronic device 100 shown in FIG. 10 is an implementation of the present disclosure and many variations thereto may be performed based on components shown in FIG. 10.

The user input reception unit 1010 may receive a user input from a user and detect the release of the user touch input.

In this case, the user input reception unit 1010 may receive various types of user inputs. For example, the user input reception unit 1010 may receive the touch input that is performed on the input panel of the electronic device 1000 using a stylus including an S-pen or a finger. Such touch input means when the finger or the stylus is in physical contact with the input panel of the electronic device 1000.

However, according to a characteristic supported by the input panel or the electronic device 1000, even while the finger or the stylus is not in contact with the input panel, a user input according to various embodiments of the present disclosure may be implemented. For example, when the finger is in a certain distance from the input panel, the electronic device 1000 may detect a change in electromagnetic field by the finger and the user input reception unit 1010 may determine based on a detection result whether a user input is performed. Similarly, the user input reception unit 1010 may determine that a touch input is performed, when the stylus is close to the input panel.

The determination unit 1020 may determine whether the user input received by the user input reception unit 1010 corresponds to the edge area of the input panel. In addition, it is possible to further determine whether the user input corresponds to a corner area or a segment area form among the edge areas.

As a determination result, when the user input corresponds to the edge area of the input panel, the determination unit 1020 may further determine whether the user input has moved by a distance equal to or greater to a preset distance. According to another embodiment of the present disclosure, when the user input corresponds to the segment area, the determination unit 1020 may further determine whether the user input satisfies a preset angle condition.

According to an embodiment of the present disclosure, the determination unit 1020 may be or be included in a processor, such as an application processor (AP) or touch screen panel (TSP) integrated circuit (IC).

The display unit 1030 may display a preset object or the screen effect on a display panel when the user input moves from an edge area to an internal part by a distance equal to or greater to the preset distance. The input panel may overlay the display panel.

In this example, the preset object may include a menu selection UI, a text input UI or summary information providing UI and the preset screen effect may include switching a screen, or reducing or enlarging the screen.

The display location or size of the preset object may be determined based on the trajectory of a movement of the user input or the release of the user touch input. For example, when a touch release event occurs, the preset object moves on the display panel according to the trajectory of a movement of the user input and then may be fixed to and displayed on a location at which the touch release event occurs.

Furthermore, the display unit 1030 may display the preset object or the screen effect based on whether the user input started from a corner area or a segment area of edge areas; whether the number of user inputs is one or whether the number of user inputs is two or more; or whether a plurality of user inputs correspond to one segment area or one corner area, or whether a plurality of user inputs correspond to one segment area and one corner area.

The memory 1040 may store data. In this case, data stored in the memory may include data that is input and output between components in the electronic device 1000. Furthermore, data stored in the memory may include data that is input and output between the electronic device 1000 and components external to the electronic device 1000. For example, the memory 1040 may store the location and moving distance of the user input on the input panel, the user input being received by the user input reception unit 1010. An example of such a memory 1040 may include a hard disk drive (HDD), a read only memory (ROM), a random access memory (RAM), a flash memory and a memory card that are internal or external to the electronic device 100.

A person skilled in the art will be able to sufficiently understand that the user input reception unit 1010, the determination unit 1020, the display unit 1030, and the memory 1040 may be separately implemented or one or more thereof may be integrated.

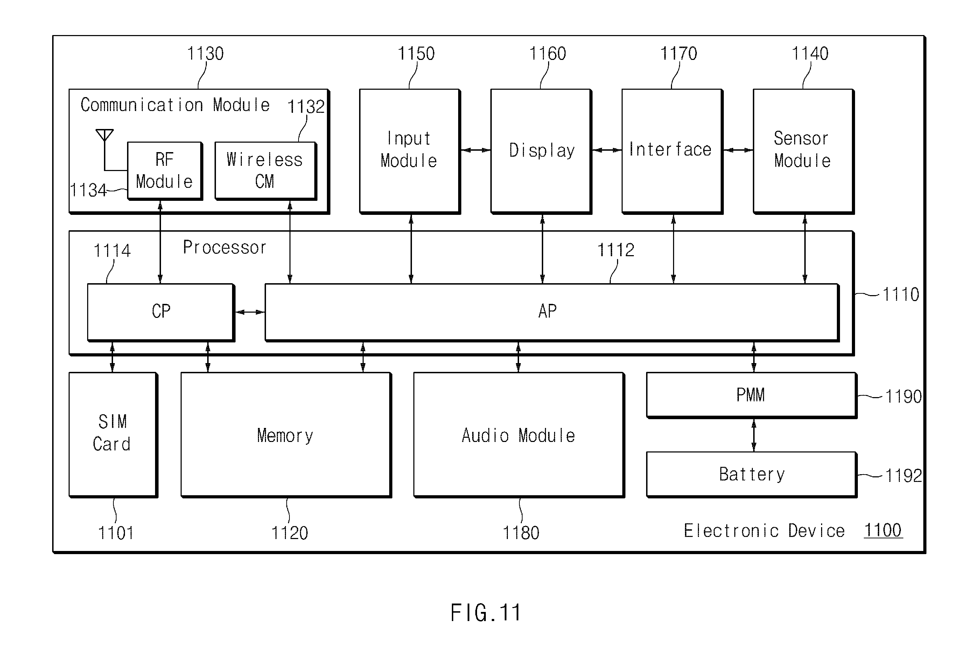

FIG. 11 illustrates a structure of an electronic device that displays a preset object or a screen effect according to various embodiments of the present disclosure.

Referring to FIG. 11, an electronic device 1100 may include a processor 1110, a memory 1120, a communication module 1130, a sensor module 1140, an input module 1150, a display 1160, an interface 1170, an audio module 1180, a power management module (PMM) 1190, a battery 1192, and a subscriber identification module (SIM) card 1101.

The processor 1110 may include one or more APs 1112 and/or one or more communication processors (CPs) 1114. FIG. 11 shows that the AP 1112 and the CP 1114 are included in the processor 1110, but the AP 1112 and the CP 1114 may be included in different IC packages, respectively. According to an embodiment of the present disclosure, the AP 1112 and the CP 1114 may be included in one IC package.

The AP 1112 may execute an operating system or an application program to control a plurality of hardware and software components connected to the AP 1112 and may perform processing and calculation on various pieces of data including multimedia data. The AP 1112 may be implanted as a system on chip (SoC) for example. According to an embodiment of the present disclosure, the processor 1110 may further include a graphic processing unit (GPU).

The CP 1114 may perform a function of managing a data link and converting a communication protocol during communicating between other electronic devices connected to the electronic device 1100 over a network. The CP 1114 may be implanted as an SoC. In an embodiment of the present disclosure, the CP 1114 may perform at least some of multimedia control functions. The CP may use a SIM (e.g., SIM card 1101) to identify and authenticate electronic devices in a communication network. In addition, the CP 1114 may provide voice call, video call, text message and packet data services to a user.

In addition, the CP 1114 may perform the data transmission/reception of the communication module 1130. FIG. 11 shows components including the CP 1114, the PMM 1190 and the memory 1120 separately from the AP 1112, but according to an embodiment of the present disclosure, the AP 1112 may be implemented to include at least some (e.g., CP 814) of the above-described components.

According to an embodiment of the present disclosure, the AP 1112 or the CP 1114 may load, on volatile memories, commands or data received from non-volatile memories connected to the AP 1112 and the CP 1114 or from at least one of other components, and may process the commands or data. In addition, the AP 1112 or the CP 1114 may store, in non-volatile memories, data received from at least one of other components or generated by at least one of other components.

The SIM card 1101 may be a card including a subscriber identification module and may be inserted into a slot that is formed on a specific part of an electronic device. The SIM card 1101 may include unique identification information (e.g., integrated circuit card identifier (ICCID)) or subscriber information (e.g., international mobile subscriber identity (IMSI)).

The memory 1120 may include an internal memory and/or external memory. The internal memory may include at least one of a volatile memory, such as a dynamic RAM (DRAM), static RAM (SRAM), or synchronous dynamic RAM (SDRAM), and a non-volatile memory, such as an one time programmable ROM (OTPROM), a programmable ROM (PROM), an erasable programmable ROM (EPROM), an electrically erasable programmable ROM (EEPROM), a mask ROM, a flash ROM, a Not AND (NAND) flash memory, or a Not OR (NOR) flash memory. According to an embodiment of the present disclosure, the internal memory may be a solid state disk (SSD). The external memory may further include a flash drive, such as a compact flash (CF) card, a secure digital (SD) card, a micro-SD card, a mini-SD card, an extreme digital (xD) card, or a memory stick. The external memory may be functionally connected to the electronic device 1100 through various interfaces. According to an embodiment of the present disclosure, the electronic device 1100 may further include a storage device (or storage medium), such as an HDD.

The communication module 1130 may include a wireless communication module 1132 and/or a radio frequency (RF) module 1134. The wireless communication module 1132 may include, for example, a wireless fidelity (Wi-Fi), Bluetooth, GPS, or near field communication (NFC) module. The wireless communication module 1132 may use a RF to provide a wireless communication function. In addition, the wireless communication module 1132 may include a network interface (e.g., a local area network (LAN) card or a modem) for connecting the electronic device 1100 to a network (e.g., an internet network, a LAN, a wide area network (WAN), a telecommunication network, a cellular network, a satellite network or a plain old telephone service (POTS) network).

The RF module 1134 may be responsible for data communication, such as transmission and reception of an RF signal. The RF module 1134 may include e.g., a transceiver, a power amp module (PAM), a frequency filter or a low noise amplifier (LNA). In addition, the RF module 1134 may further include a part, such as a conductor or wire for transmitting or receiving electromagnetic waves in a free space when performing wireless communication. In an embodiment of the present disclosure, an antenna system may correspond to the RF module 1134 or at least a portion of the RF module.

The sensor module 1140 may measure a physical quantity, detect the operation state of the electronic device 1100 and convert measured or detected information into an electrical signal. The sensor module 1140 may include at least one of a gesture sensor, a gyro sensor, an atmospheric pressure sensor, a magnetic sensor, an acceleration sensor, a grip sensor, a proximity sensor, a color sensor (e.g., a red, green, and blue (RGB) sensor), a bio sensor, a temperature/ humidity sensor, an illumination sensor, an ultra violet (UV) sensor, and the like. In addition, the sensor module 1140 may include a smell sensor, an electromyograplry (EMG) sensor, an electroencephalogram (EEG) sensor, an electrocardiogram (ECG) sensor, an infrared (IR) sensor, an iris sensor or a fingerprint sensor. The sensor module 1140 may further include a control circuit for controlling at least one sensor.

The input module 1150 may include an input panel, a (digital) pen sensor, a key or an ultrasonic input device. The input panel may recognize a touch input by using at least one of capacitive, pressure-sensitive, infrared or ultrasonic techniques, for example. In addition, the input panel may further include a control circuit. In the case of the capacitive technique, a physical contact or proximity awareness is possible. The input panel may further include a tactile layer. In this case, the input panel may provide a tactile response to a user.

The display 1160 may include a display panel, a hologram or a projector. For example, the display panel may be a liquid crystal display (LCD) or an active matrix organic light emitting diode (AMOLED). In addition, the display panel may be implemented flexibly, transparently or wearably. The display panel and the input panel may also be configured in a module. The hologram may use the interference of a light to show a stereoscopic image in the air. The projector may project a light onto a screen to display an image. The screen may be located internal or external to the electronic device 1100. According to an embodiment of the present disclosure, the display 1160 may further include a control circuit for controlling the display panel, a hologram or a projector.

The interface 1170 may include a high definition multimedia interface (HDMI), a universal serial bus (USB), an optical communication terminal or a D-Subminiature (D-sub) terminal. In addition, the interface 1170 may include a mobile high-definition link (MHL), SD card/multi-media card (MMC) or infrared data association (IrDA) unit.

The audio module 1180 may convert sound into an electrical signal or vice versa. The audio module 1180 may process sound information input or output through a speaker, a receiver, an earphone or a microphone.

The PMM 1190 may manage the power of the electronic device 1100. The PMM 1190 may include a power management integrated circuit (PMIC), a charger IC, or a battery or fuel gauge.

An electronic device that may implement various embodiments of the present disclosure may include all or some of the above-described components. For example, the electronic device may include the processor 1110 and a screen for a display. The screen may perform at least one of functions provided by the input module receiving a user's touch input, the display 1160 providing a display according to a user input, the UI 1170, and/or the sensor module 1140 sensing a capacitive, pressure-sensitive or optical input.

In response to a user input, the processor 1110 may display a background layer on the screen of the electronic device and overlay information layer on the background layer to display them on the screen, in which case the background layer and/or information layer may be displayed with a changed scale.

In addition, the electronic device 1100 may further include a gravity sensor for sensing the direction of gravity currently. The processor may determine a direction in which the particles move, based on the direction of gravity detected by the gravity sensor so that the particles move in the direction of gravity or in the direction opposite to the gravity.

Each of the above-described elements of the electronic device according to the present disclosure may include one or more components and the names of corresponding elements may vary depending on the type of an electronic device. The electronic device according to the present disclosure may include at least one of the above-described elements and some elements may be left out or other elements may be further included. In addition, some of the elements of the electronic device according to the present disclosure are combined to form an entity, which may equally perform the functions of corresponding elements before being combined.

The term "module" used in the present disclosure may mean a unit including one of hardware, software and firmware or a combination of two or more thereof, for example. The "module" may be interchangeably used with the term "unit", "logic", "logical block", "component", or "circuit", for example. The "module" may be an elementary unit of or a portion of an integral component. The "module" may also be an elementary unit for performing one or more functions or a portion of the elementary unit. The "module" may be implemented mechanically or electronically. For example, the "module" according to the present disclosure may include at least one selected from the group consisting of an application-specific integrated circuit (ASIC) chip, a field-programmable gate array (FPGA) and a programmable-logic device that perform some operations and have been known or will be developed.

According to various embodiments, at least a portion of the device, such as modules or their functions, or a method, such as operations, according to various embodiments of the present disclosure may be implemented as a command stored in a computer-readable storage medium in the form of a programming module. When the command is executed by one or more processors (e.g., the processor 1110), the one or more processors may execute a function corresponding to the command. The computer readable storage medium may be the storage unit 1120, for example. At least a portion of the programming module may be implemented (e.g., performed) by e.g., the processor 1100. At least a portion of the programming module may include e.g., a module, a program, a routine, a set of instructions or a process for executing one or more functions.

Certain embodiments of the present disclosure can also be embodied as computer readable code on a non-transitory computer readable recording medium. A non-transitory computer readable recording medium is any data storage device that can store data which can be thereafter read by a computer system. Examples of the non-transitory computer readable recording medium include a Read-Only Memory (ROM), a Random-Access Memory (RAM), Compact Disc-ROMs (CD-ROMs), magnetic tapes, floppy disks, and optical data storage devices. The non-transitory computer readable recording medium can also be distributed over network coupled computer systems so that the computer readable code is stored and executed in a distributed fashion. In addition, functional programs, code, and code segments for accomplishing the present disclosure can be easily construed by programmers skilled in the art to which the present disclosure pertains.

At this point it should be noted that the various embodiments of the present disclosure as described above typically involve the processing of input data and the generation of output data to some extent. This input data processing and output data generation may be implemented in hardware or software in combination with hardware. For example, specific electronic components may be employed in a mobile device or similar or related circuitry for implementing the functions associated with the various embodiments of the present disclosure as described above. Alternatively, one or more processors operating in accordance with stored instructions may implement the functions associated with the various embodiments of the present disclosure as described above. If such is the case, it is within the scope of the present disclosure that such instructions may be stored on one or more non-transitory processor readable mediums. Examples of the processor readable mediums include a ROM, a RAM, CD-ROMs, magnetic tapes, floppy disks, and optical data storage devices. The processor readable mediums can also be distributed over network coupled computer systems so that the instructions are stored and executed in a distributed fashion. In addition, functional computer programs, instructions, and instruction segments for accomplishing the present disclosure can be easily construed by programmers skilled in the art to which the present disclosure pertains.

The module or programming module according to the present disclosure may include at least one selected from the group consisting of the above-described elements and some elements may be left out or other elements may be further included. Operations executed by a module, a programming module or another element according to the present disclosure may be executed by using a sequential, parallel, repetitive or heuristic method. In addition, the execution order of some operations may vary, some operations may be left out or further operations may be added.

According to any one of the solutions of the present disclosure as described above, various embodiments of the present disclosure may display a preset object or a screen effect on the display panel of the electronic device in response to a user input event obtained from a user. In this case, a displayed preset object or screen effect may provide user convenience in an application executed by the electronic device.

While the present disclosure has been shown and described with reference to various embodiments thereof, it will be understood by those skilled in the art that various changes in form and details may be made therein without departing from the scope of the present disclosure as defined by the appended claims and their equivalents.

## Claims

1. A method of displaying a user interface (UI) on a display panel of an electronic device, the method comprising:
receiving an event corresponding to a movement of a user input from an edge of an input panel of the electronic device to an internal part of the input panel; and
displaying a preset object or a preset screen effect based on the event that occurs on an edge of the input panel.

2. The method of claim 1, wherein the displaying of the preset object comprises displaying at least one of a menu selection UI, a text input UI, or a summary information providing UI.

3. The method of claim 1, wherein the displaying of the preset screen effect comprises at least one of switching, reducing or enlarging a screen.

4. The method of claim 3, wherein the switching of the screen comprises displaying at least one of a screen of a preset application or a screen of an application being executed on the background.

5. The method of claim 1, wherein the preset object or the preset screen effect is displayed according to a trajectory of the movement.

6. The method of claim 1, wherein the preset object or the preset screen effect is displayed when a moving distance of the movement is equal to or greater than to a preset distance.

7. The method of claim 1, wherein the preset object or the preset screen effect is displayed when the angle between the trajectory of the movement and the edge of the input panel is equal to or greater than to a preset angle.

8. The method of claim 1, further comprising:
receiving an event corresponding to a touch release of the user input on the input panel,
wherein the displaying of the preset object is performed on a location corresponding to the touch release.

9. The method of claim 1, further comprising:
receiving an event corresponding to a touch release of the user input on the input panel,
wherein a size of the preset object is determined based on a location corresponding to the touch release.

10. The method of claim 1, wherein the preset object or the preset screen effect is determined based on a number of the events.

11. The method of claim 10, wherein the preset object or the preset screen effect is determined based on a direction in which each of the events moves.

12. The method of claim 1, further comprising:
receiving a new event corresponding to a movement of a user input from an internal part of the input panel to an edge of the input panel; and
making the displayed preset object or the displayed preset screen effect disappear.

13. The method of claim 1, further comprising:
receiving a new event corresponding to a movement of a user input from an edge of the input panel of the electronic device to an internal part of the input panel; and
making the displayed preset object or the displayed preset screen effect disappear, or displaying a new preset object or a new preset screen effect based on the new event.

14. The method of claim 1, wherein the preset object or the preset screen effect is determined based on a location of at least one selected from the group consisting of a plurality of corners of edges or a plurality of segments of the edges corresponding to the event.

15. An electronic device comprising:
a user input reception unit configured to receive a user input moving from an edge of an input panel of the electronic device to an internal part of the input panel; and
a display unit configured to display a preset object or a preset screen effect based on the reception of the user input.
